# EUROPÄISCHE PATENTSCHRIFT

(11) **EP 1 693 301 B1**
(45) Veröffentlichungstag und Bekanntmachung des Hinweises auf die Patenterteilung: **13.06.2007**
(21) Anmeldenummer: 05027029.7
(22) Anmeldetag: 10.12.2005
(51) Int. Cl.: B65B 65/00, F16P 1/02

(54) **Maschinengehäuse für eine Arbeitsmaschine**
Machine housing
Carter de machine

(30) Priorität: 18.02.2005 DE 102005007691
(43) Veröffentlichungstag der Anmeldung: 23.08.2006
(73) Patentinhaber: UHLMANN PAC-SYSTEME GmbH & Co. KG, 88471 Laupheim (DE)
(72) Erfinder: Arb Rudolf, D 88471 Untersulmentingen (DE); Bentele Josef, D 88471 Laupheim (DE); Pfau Georg, D 88471 Laupheim (DE)
(74) Vertreter: Hentrich, Swen

(56) Entgegenhaltungen:
- EP-A- 0 606 560
- DE-A1- 3 635 900
- US-A1- 2004 128 915
- PATENT ABSTRACTS OF JAPAN Bd. 2003, Nr. 12, 5. Dezember 2003 (2003-12-05) -& JP 2004 093923 A (OMRON CORP), 25. März 2004 (2004-03-25)

## Beschreibung

Die Erfindung betrifft ein Maschinengehäuse für eine Arbeitsmaschine, insbesondere eine Verpackungsmaschine für die pharmazeutische Industrie, mit einem durch eine Mehrzahl von Seitenwänden begrenzten Einbauraum, der durch eine Tür zugänglich ist.

Derartige Maschinengehäuse finden sich bei nahezu jeder Arbeitsmaschine, bei der für die Nutzer der Zugang zum Einbauraum gewährleistet sein muß. Die Tür ist dabei in der Regel als Schwenktür gestaltet, oder, wenn aufgrund Platzmangels der Schwenkbereich nicht freigehalten werden kann, als Schiebetür ausgeführt. Schiebetüren sind aber auf der Innenseite schlecht zugänglich und daher nur schwer zu reinigen.

Weiterhin ist aus der US 2004/0128915 A1 ein Maschinengehäuse gemäß dem Oberbegriff des Anspruchs 1 bekannt.

Der Erfindung liegt die Aufgabe zugrunde ein Maschinengehäuse dieser Art so zu gestalten, daß bei geringem Platzbedarf neben dem Maschinengehäuse eine leichte Zugänglichkeit zum Einbauraum und zu beiden Seiten der Tür gegeben ist.

Diese Aufgabe wird nach der Erfindung bei einem Maschinengehäuse der eingangs genannten Art dadurch gelöst, daß die beiden Türblätter lösbar miteinander verbunden sind.

Ein derartiges Maschinengehäuse zeichnet sich dadurch aus, daß im Normalbetrieb nur ein kleiner Bereich freizuhalten ist, in den die Türblätter zum Öffnen verschwenken können. Im geöffneten Zustand verdecken sich dabei die Innenseite der beiden Türblätter gegenseitig und sind so nicht zu reinigen. Eine Reinigung ist aber leicht dadurch möglich, daß die Verbindung der Türblätter gelöst wird und jedes Türblatt so wie bei einer Schwenktür von beiden Seiten zugänglich wird.

Eine Ausführungsform, die sich durch die Einfachheit ihrer Mittel auszeichnet, ist gegeben, wenn die beiden Türblätter durch zwei lösbare Verriegelungsbolzen miteinander verbunden sind.

Günstig ist es auch, wenn die Falttür an ihrem unteren Ende gelagert und an ihrem oberen Ende nur geführt ist, da so die Abstützung anders als bei üblichen, oben aufgehängten Falttüren, unten am Rahmen des Maschinengestells erfolgt.

Der leichten Bedienbarkeit zur Vermeidung eines bei Falttüren stets zu gegenwärtigen Verkantens dient, daß am unterem Ende des Maschinengehäuses auf der durch die Falttür verschlossenen Seite eine Laufschiene angeordnet ist, auf der die Falttür mit mindestens einer Laufrolle und/oder Gleitstück abgestützt ist, insbesondere wenn jedem Türblatt eine Laufrolle bzw. Gleitstück zugeordnet ist.

Gegenüberliegend zu der Laufschiene ist eine Führungsschiene angeordnet, an der die Falttür mit ihrem oberen Ende geführt ist, um die Querkräfte aufzufangen und ein Verkippen der Falttür unter der Wirkung der Schwerkraft zu verhindern.

Um große Öffnungen in einfacher Weise verschliessen zu können, ohne den Freiraum neben dem Maschinengehäuse vergrößern zu müssen, ist die Falttür mehrfach vorgesehen mit gelenkig miteinander verbundenen Türblättern benachbarter Falttüren.

Um eine optimale Lärmdämmung zu erhalten, ist weiterhin vorgesehen, daß zwischen zwei benachbarten Türblättern ein Dichtprofil angeordnet ist, und daß die Falttür gegenüber dem Maschinenrahmen abgedichtet ist.

Eine bevorzugte Ausführungsform der Erfindung ist dadurch gekennzeichnet, daß mindestens eines der Türblätter aus einem Sicherheitsverbundglas gebildet ist. Das Sicherheitsverbundglas läßt den Einblick in den Einbauraum problemlos zu und gewährleistet, daß im Falle einer Beschädigung, bei der in der Regel nur ein Sprung auftritt, der den weiteren Betrieb der in dem Maschinengehäuse angeordneten Vorrichtung nicht beeinträchtigt. Desweiteren ist das Sicherheitsverbundglas unempfindlich gegenüber mechanischen und chemischen Einflüssen, wie diese zur Reinigung pharmazeutischer Maschinen vorkommen.

Das Sicherheitsniveau wird erhöht, wenn ein Sicherheitsschalter zur Überwachung der Türstellung der Falttür vorgesehen ist, da so bei geöffneter Falttür ein Stillsetzen der Vorrichtung zur Vermeidung einer Gefährdung des Nutzers einfach erfolgen kann.

Im folgenden wird die Erfindung an einem in der Zeichnung dargestellten Ausführungsbeispiel näher erläutert; es zeigen:
- Fig. 1: eine Vorderansicht eines auf einer Seite durch eine Falttür verschlossenen Maschinengehäuses,
- Fig. 2: eine Draufsicht auf den Maschinenrahmen des Maschinengehäuses mit der geschlossenen Falttür aus Figur 1,
- Fig. 3: eine der Figur 2 entsprechende Darstellung mit zwei nach dem Lösen der Verriegelungsbolzen aufgeschwenkten Türblättern einer Falttür,
- Fig. 4: eine der Figur 2 entsprechende Darstellung mit der vollständig nach links geöffneten Falttür,
- Fig. 5: eine der Figur 2 entsprechende Darstellung mit der vollständig nach rechts geöffneten Falttür, und
- Fig. 6: eine Seitenansicht eines vor dem Maschinenrahmen geführten und gelagerten Türblatts der Falttür.

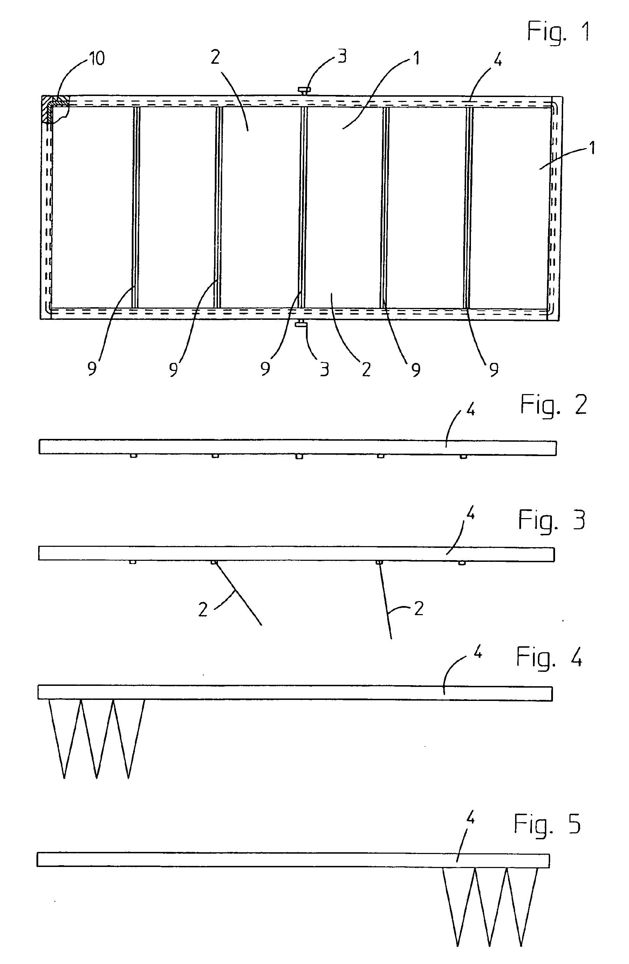

In der Zeichnung ist in Figur 1 schematisch ein Maschinengehäuse 4 für eine Arbeitsmaschine gezeigt, wie sie beispielsweise als Verpackungsmaschine in der pharmazeutischen Industrie eingesetzt wird. Dieses Maschinengehäuse weist einen durch eine Mehrzahl von Seitenwänden begrenzten Einbauraum auf, der durch eine Tür zugänglich ist. Diese Tür ist gemäß der Erfindung durch eine Falttür 1 mit mindestens zwei Türblättern 2 gebildet, die auf den einander zugewandten Seiten lösbar und schwenkbar miteinander durch zwei lösbare Verriegelungsbolzen 3 verbunden sind.

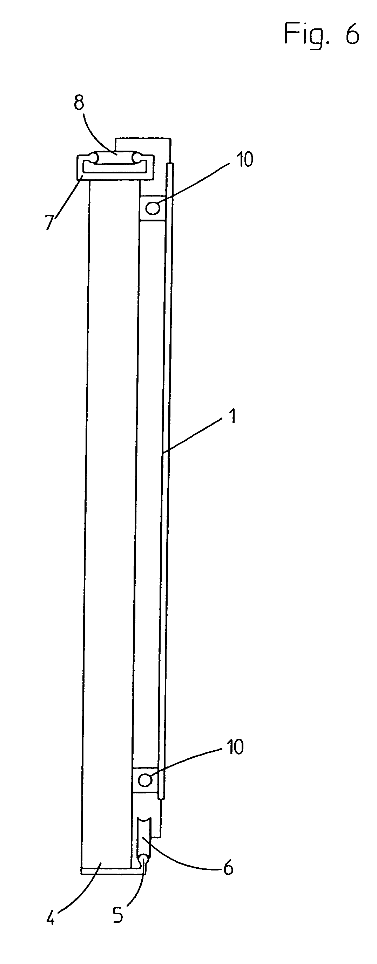

Anders als bei der gängigen Aufhängung bekannter Falttüren ist die erfindungsgemäße Falttür 1 an ihrem unteren Ende gelagert und an ihrem oberen Ende geführt, wobei an dem unterem Ende des Maschinengehäuses 4 auf der durch die Falttür 1 verschlossenen Seite eine Laufschiene 5 angeordnet ist, auf der die Falttür 1 mit mindestens einer Laufrolle 6 abgestützt ist, wie in dem Ausführungsbeispiel gezeigt (Figur 6). Für eine leichte Bedienbarkeit und gute Leichtgängigkeit ist jedem Türblatt 2 eine Laufrolle 6 oder alternativ ein Gleitstück zugeordnet. Die Figur 6 läßt auch erkennen, daß gegenüberliegend zu der Laufschiene 5 eine Führungsschiene 7 angeordnet ist, an der die Falttür 1 mit ihrem oberen Ende mit einer zweiten Laufrolle 8 geführt ist.

Um auch eine Gehäuseöffnung großer Abmessung verschließen zu können, ohne durch für große Türblätter 2 einen großen Freiraum vor dem Maschinengehäuse 4 bereit stellen zu müssen, ist die Falttür 1 mehrfach vorgesehen ist mit gelenkig miteinander verbundenen Türblätter 2 benachbarter Falttüren 1. Diese Kombination mehrerer Falttüren 1 kann selbstverständlich auch als eine Falttür 1 aufgefaßt werden bzw. entsprechend gestaltet sein.

Für eine benutzerfreundliche hohe Geräuschdämmung ist zwischen zwei benachbarten Türblätter 2 ein Dichtprofil 9 angeordnet. Weiterhin ist auch die Falttür 1 gegenüber dem Maschinenrahmen abgedichtet, und zwar gleichfalls unter Verwendung eines Dichtprofils 10.

Bei der zur Erfindung gehörenden Falttür 1 ist es möglich, daß mindestens eines der Türblätter 2, oder sogar jedes aus einem Sicherheitsverbundglas gebildet ist, das aus zwei mittels einer Klebefolie verbundenen TVG-Glasscheiben besteht. Tritt eine Beschädigung des Sicherheitsverbundglases auf, zeigt sich in der Regel nur ein Riß und das Maschinengehäuse 4 bleibt verschlossen und die Arbeitsmaschine kann ohne Produktionsstörung weiter betrieben werden. Außerdem besteht die Möglichkeit, durch eine unterschiedliche Einfärbung der Klebefolie oder des Scheibenglases das optische Erscheinungsbild zu ändern und an Kundenwünsche anzupassen.

Die Falttür 1 weist als sicherheitsrelevantes Merkmal auch einen Sicherheitsschalter zur Überwachung der Türstellung auf.

## Patentansprüche

1. Maschinengehäuse für eine Arbeitsmaschine, insbesondere eine Verpackungsmaschine für die pharmazeutische Industrie, mit einem durch eine Mehrzahl von Seitenwänden begrenzten Einbauraum, der durch eine Tür zugänglich ist, wobei die Tür durch eine Falttür (1) mit mindestens zwei auf den einander zugewandten Seiten schwenkbar miteinander verbundenen Türblättern (2) gebildet ist, **dadurch gekennzeichnet, daß** die beiden Türblätter lösbar miteinander verbunden sind.

2. Maschinengehäuse nach Anspruch 1, **dadurch gekennzeichnet, daß** die beiden Türblätter (2) durch zwei lösbare Verriegelungsbolzen (3) miteinander verbunden sind.

3. Maschinengehäuse nach Anspruch 1 oder 2, **dadurch gekennzeichnet, daß** die Falttür (1) an ihrem unteren Ende gelagert und an ihrem oberen Ende geführt ist.

4. Maschinengehäuse nach Anspruch 3, **dadurch gekennzeichnet, daß** an dessen unterem Ende auf der durch die Falttür (1) verschlossenen Seite eine Laufschiene (5) angeordnet ist, auf der die Falttür (1) mit mindestens einer Laufrolle (6) und/oder Gleitstück abgestützt ist.

5. Maschinengehäuse nach Anspruch 4, **dadurch gekennzeichnet, daß** jedem Türblatt (2) eine Laufrolle (6) bzw. Gleitstück zugeordnet ist.

6. Maschinengehäuse nach Anspruch 4 oder 5, **dadurch gekennzeichnet, daß** gegenüberliegend zu der Laufschiene (5) eine Führungsschiene (7) angeordnet ist, an der die Falttür (1) mit ihrem oberen Ende geführt ist.

7. Maschinengehäuse nach einem der Ansprüche 1 bis 6, **dadurch gekennzeichnet, daß** die Falttür (1) mehrfach vorgesehen ist mit gelenkig miteinander verbundenen Türblätter (2) benachbarter Falttüren (1).

8. Maschinengehäuse nach einem der Ansprüche 1 bis 7, **dadurch gekennzeichnet, daß** zwischen zwei benachbarten Türblättern (2) ein Dichtprofil (9) angeordnet ist.

9. Maschinengehäuse nach einem der Ansprüche 1 bis 8, **dadurch gekennzeichnet, daß** die Falttür (1) gegenüber dem Maschinenrahmen abgedichtet ist.

10. Maschinengehäuse nach einem der Ansprüche 1 bis 9, **dadurch gekennzeichnet, daß** mindestens eines der Türblätter (2) aus einem Sicherheitsverbundglas gebildet ist.

11. Maschinengehäuse nach einem der Ansprüche 1 bis 10, **dadurch gekennzeichnet, daß** ein Sicherheitsschalter zur Überwachung der Türstellung der Falttür (1) vorgesehen ist.

## Claims

1. A machine housing for a working machine, in particular a packaging machine for the pharmaceutical industry, comprising an installation space which is delimited by a plurality of side walls and which is accessible through a door, wherein the door is formed by a folding door (1) with at least two door leaves (2) which are pivotably connected together on the mutually facing sides, **characterised in that** the two door leaves are releasably connected together.

2. A machine housing according to claim 1 **characterised in that** the two door leaves (2) are connected together by two releasable connecting pins (3).

3. A machine housing according to claim 1 or claim 2 **characterised in that** the folding door (1) is supported at its lower end and guided at its upper end.

4. A machine housing according to claim 3 **characterised in that** arranged at the lower end thereof on the side closed by the folding door (1) is a rail (5) on which the folding door (1) is supported with at least one roller (6) and/or sliding portion.

5. A machine housing according to claim 4 **characterised in that** a roller (6) or sliding portion is associated with each door leaf (2).

6. A machine housing according to claim 4 or claim 5 **characterised in that** arranged in opposite relationship to the rail (5) is a guide rail (7) at which the folding door (1) is guided with its upper end.

7. A machine housing according to one of claims 1 to 6 **characterised in that** the folding door (1) is provided in a multiple array, having door leaves (2) of adjacent folding doors (1) hingedly connected together.

8. A machine housing according to one of claims 1 to 7 **characterised in that** a sealing profile (9) is arranged between two adjacent door leaves (2).

9. A machine housing according to one of claims 1 to 8 **characterised in that** the folding door (1) is sealed with respect to the machine frame.

10. A machine housing according to one of claims 1 to 9 **characterised in that** at least one of the door leaves (2) is formed from a safety laminate glass.

11. A machine housing according to one of claims 1 to 10 **characterised in that** there is provided a safety switch for monitoring the door position of the folding door (1).

## Revendications

1. Carter de machine, notamment d'une machine d'emballage pour l'industrie pharmaceutique, qui présente un volume interne délimité par une pluralité de parois latérales et accessible par une porte, cette porte étant une porte pliante (1) constituée d'au moins deux panneaux de porte articulés entre eux le long de deux côtés opposés, **caractérisé en ce que** les deux panneaux de porte sont reliés entre eux de manière amovible.

2. Carter de machine selon la revendication 1, **caractérisé en ce que** les deux panneaux de porte (2) sont reliés par deux tenons de verrouillage (3) amovibles.

3. Carter de machine selon la revendication 1 ou 2, **caractérisé en ce que** la porte pliante est portée à son extrémité inférieure tandis qu'elle est guidée à son extrémité supérieure.

4. Carter de machine selon la revendication 3, **caractérisé en ce que** le long de son extrémité inférieure, du côté fermé par la porte pliante (1), est monté un rail porteur (5) sur lequel la porte pliante s'appuie par au moins un galet de roulement (6) et/ou une pièce de glissement.

5. Carter de machine selon la revendication 4, **caractérisé en ce qu'**à chaque panneau de porte (2) est associé un galet de roulement (6) ou une pièce de glissement

6. Carter de machine selon la revendication 4 ou 5, **caractérisé en ce qu'**à l'opposé du rail porteur (5), est disposé un rail de guidage (7) le long duquel la porte pliante (1) est guidée par son extrémité supérieure.

7. Carter de machine selon une des revendications 1 à 6, **caractérisé en ce que** la porte pliante (1) est multiple et constituée de panneaux de porte (2) articulés entre eux appartenant à des portes pliantes (1) voisines.

8. Carter de machine selon une des revendications 1 à 7, **caractérisé en ce qu'**entre deux panneaux de porte (2) voisins, est monté un profilé d'étanchéité (9).

9. Carter de machine selon une des revendications 1 à 8, **caractérisé en ce que** la porte pliante (1) est rendue étanche par rapport au cadre de machine.

10. Carter de machine selon une des revendications 1 à 9, **caractérisé en ce qu'**au moins un des panneaux de porte (2) est en verre de sécurité feuilleté.

11. Carter de machine selon une des revendications 1 à 10, **caractérisé en ce qu'**il est prévu un contacteur de sécurité pour surveiller la position de la porte pliante (1).
